# EUROPÄISCHE PATENTSCHRIFT

(11) **EP 0 844 471 B1**
(45) Veröffentlichungstag und Bekanntmachung des Hinweises auf die Patenterteilung: **24.03.2004**
(21) Anmeldenummer: 97120195.9
(22) Anmeldetag: 18.11.1997
(51) Int. Cl.: G01M 3/32

(54) **Flüssigkeitsleckwarnsystem**
Warning system for liquid leakage
Système d'avertissement d'une fuite de liquide

(30) Priorität: 21.11.1996 US 753200
(43) Veröffentlichungstag der Anmeldung: 27.05.1998
(73) Patentinhaber: Deere & Company, Moline, IL 61265-8098 (US)
(72) Erfinder: Refugio, Maria Rosalyn Bengua, Milwaukee, Wisconsin 53202 (US); Lamb, Mark Edward, Mayville, Wisconsin 53050 (US); Marquart, Gordon Le Roy, Jesup, Lowa 50648 (US)
(74) Vertreter: Magin, Ludwig Bernhard

(56) Entgegenhaltungen:
- US-A- 4 591 837
- US-A- 4 807 464
- US-A- 5 254 976
- US-A- 5 402 110

## Beschreibung

Die Erfindung bezieht sich auf ein Flüssigkeitsleckwarnsystem mit einem Haupttank, einem Ausgleichsbehälter, der mit dem Haupttank verbunden ist, einem ersten Absperrorgan, das bei thermischer Expansion der hydraulischen Flüssigkeit eine Flüssigkeitsverbindung von dem Haupttank in den Ausgleichsbehälter gestattet, und mit einer Signaleinrichtung.

Derartige Systeme finden bevorzugt bei auf Golfplätzen einsetzbaren selbstfahrenden Rasenmähern Verwendung. Ölleckwarnsysteme sind aber grundsätzlich bei Fahrzeugen jeglicher Art einsetzbar. Sie sollen den Fahrer oder eine Bedienungsperson auf mögliche Ölverluste aufmerksam machen, was bei den heutigen Anforderungen an die Umwelt auch berechtigt ist. Herkömmliche und insbesondere auf Golfplätzen einsetzbare Mäher zeichnen sich dadurch aus, dass sie viele hydraulisch betriebene Komponenten, wie einen hydraulischen Antrieb für die Treibräder, Hydromotore für den Antrieb der Spindelmähwerke oder Hubzylinder zum Ausheben der Mähwerke in die Transportstellung oder zum Absenken der Mähwerke in die Arbeitsstellung aufweisen. Solche Hydrauliksysteme sind naturgemäß störanfällig und es können undichte Stellen auftreten, durch die hydraulische Flüssigkeit auf den Boden tropft. Abgesehen von der Bodenbelastung kommt bei einem Einsatz auf Grünflächen noch hinzu, dass der Rasen dann abstirbt, was nicht nur unschön aussieht sondern auf Golfplätzen auch den Spielbetrieb beeinflußt. Bemerkt eine Bedienungsperson die Leckage nicht oder zu spät, so können lange Streifen mit abgestorbenem Gras entstehen. Um dies zu verhindern, sind Ölleckwarnsysteme (US-4 591 837, US-A-5 402 110) bekannt, die bei einem Flüssigkeitsabfall in einem Behälter ein Warnsignal aussenden, woraufhin eine Bedienungsperson den Fahrbetrieb einstellen oder die Rasenfläche mit dem Fahrzeug sofort verlassen kann.

Bei dem Flüssigkeitsleckwarnsystem, von dem die Erfindung ausgeht (US-A-5 254 976), ist der Haupttank mit dem Ausgleichsbehälter über ein Rückschlagventil verbunden, dass bei sich erwärmender Flüssigkeit es gestattet, dass Öl aus dem Haupttank in den Ausgleichsbehälter übertritt. Durch das Rückschlagventil wird ein Rückfluß von Öl aus dem Ausgleichsbehälter in den Haupttank verhindert. Andererseits ist zwischen dem Ausgleichsbehälter und dem Haupttank ein über die Flüssigkeit gegen die Wirkung einer Feder höhenverstellbarer Hohlzylinder vorgesehen, der bei sich abkühlender Flüssigkeit einen Flüssigkeitsfluss aus dem Ausgleichsbehälter in den Haupttank ermöglichen soll. Der Hohlzylinder nimmt dann eine untere Stellung ein, weil der Flüssigkeitsfluß nicht ausreichend ist, um die Federkraft zu überwinden. Dies soll erst dann möglich sein, wenn ein Leck auftritt, wodurch ein größerer Flüssigkeitsfluß auftreten soll. In einem solchen Fall wird der Hohlzylinder aufschwimmen und eine Signaleinrichtung betätigen. Ein Aufschwimmen des Hohlzylinders erfolgt aber auch, wenn Hubzylinder mit Öl befüllt werden. Die Signaleinrichtung ist deshalb derart ausgelegt, dass sie für einen kurzen Zeitraum, der für die Zeitspanne zum Befüllen der Zylinder steht, ein optisches Signal abgibt, das durch ein akustisches Signal ergänzt wird, wenn die Zeitspanne zum Befüllen der Zylinder überschritten wird. Das akustische Signal soll auf eine Leckage hinweisen. Dieses System ist störanfällig, weil nicht ausgeschlossen werden kann, dass auch Öl aus dem Haupttank über den Hohlzylinder in den Ausgleichsbehälter gelangt. Andererseits ist der Hohlkörper als Schwimmer ausgebildet und in Vertikalrichtung geführt, so dass er leicht verklemmen kann und funktionsuntüchtig wird. Bedenklich ist außerdem eine Hohlzylinderverstellung über den Flüssigkeitsfluß.

Die mit der Erfindung zu lösende Aufgabe wird in einer vorteilhafteren Ausbildung des Flüssigkeitsleckwarnsystems gesehen, weshalb das System ferner eine mit dem Haupttank verbundene Peilkammer, ein zweites zwischen einer geschlossenen und einer offenen Stellung verstellbares und zwischen dem Haupttank und dem Ausgleichsbehälter vorgesehenes Absperrorgan, einen Temperaturfühler für die Flüssigkeit und ein Steuermodul vorsieht, das mit dem Temperaturfühler und dem zweiten Absperrorgan derart verbunden ist, dass das zweite Absperrorgan bei einem Temperaturabfall aus seiner geschlossenen Stellung in seine offene Stellung verstellt wird. Auf diese Weise sind drei Flüssigkeitsbehälter vorgesehen, und zwar ein Haupttank, ein Ausgleichsbehälter und eine Peilkammer, und bei einer thermischen Ausdehnung kann hydraulische Flüssigkeit aus der Peilkammer in den Haupttank und aus dem Haupttank in den Ausgleichsbehälter gelangen, wobei das erste Absperrorgan als ein Rückschlagventil ausgebildet sein kann, das einen Durchfluss nur in eine Richtung zulässt. Bei einem Temperaturabfall, der sehr gering sein kann und von dem Temperaturfühler erkannt wird, wird das zweite Absperrorgan in seine offene Stellung verstellt, So dass der im Haupttank infolge der sich zusammenziehenden Flüssigkeit frei werdende Raum durch Öl aus dem Ausgleichsbehälter aufgefüllt wird, wodurch verhindert wird, dass bei einem Abfallen des Flüssigkeitsstandes im Haupttank ein Falschalarm ausgelöst wird. Im Rahmen der Erfindung können das erste und das zweite Absperrorgan einstückig ausgebildet sein. In jedem Fall ergibt sich für das System ein einfacher und kostengünstiger Aufbau, ohne dass Störungen zu befürchten wären.

In einem normalen Einsatz befindet sich das zweite Absperrorgan in seiner geschlossenen Stellung, so dass aus dem Ausgleichsbehälter keine Flüssigkeit in den Haupttank gesaugt werden kann. Benötigt nun das Hydrauliksystem aus irgendeinem Grund zusätzliche Flüssigkeit, so wird nach der Erfindung ein drittes Absperrorgan vorgeschlagen, das aus seiner Schließstellung in eine Stellung verstellbar ist, in der Luft in die Peilkammer einsaugbar ist. Zweckmäßig kann dieses Absperrorgan als Rückschlagventil ausgebildet sein, das es erlaubt, dass Luft in die Peilkammer eingesaugt werden kann aber nicht durch das dritte Absperrorgan in die Atmosphäre wieder austritt. Bei einem zusätzlichen Flüssigkeitsbedarf kann damit Öl aus der Peilkammer entnommen werden, da der dann in der Peilkammer frei werdende Raum durch Luft auffüllbar ist. Die Ausbildung des dritten Absperrorgans ermöglicht es zusätzlich, dass sich bei einer Flüssigkeitserwärmung der Flüssigkeitsstand in der Peilkammer nicht verändert:

Wenn nun das Hydrauliksystem aus irgendeinem Grund zusätzliche Flüssigkeit benötigt, sollten auch Vorkehrungen getroffen werden, dass diese zusätzliche Flüssigkeit bei Bedarf wieder von den Behältem aufgenommen werden kann, weshalb die Erfindung ferner ein viertes zwischen einer offenen und einer geschlossenen Stellung verstellbaren Absperrorgan vorsieht, das in seiner offenen Stellung die Peilkammer mit der Atmosphäre verbindet.

Vorteilhaft kann das vierte Absperrorgan mit dem Steuermodul derart verbunden sein, dass es bei Temperaturabfall der Flüssigkeit in seine offene Stellung verstellt wird.

Bei in die Peilkammer einströmender Flüssigkeit und sich in seiner Offenstellung befindlichem vierten Absperrorgan sollte man dafür Sorge tragen, dass Flüssigkeit nicht in die Atmosphäre gelangt, weshalb die Oberseite der Peilkammer mit einem oberen Bereich des Ausgleichsbehälters über eine Leitung verbunden sein kann, wobei das dritte und vierte Absperrorgan in dieser Leitung vorgesehen sind. Zweckmäßig ist dabei die Peilkammer zu entlüften, wobei die Leitung serpentinenartig geführt ist, damit etwa in die Leitung eintretendes Öl nicht in den Ausgleichsbehälter gelangt.

Damit bei einem Absinken der Flüssigkeitstemperatur das zweite Absperrorgan nicht zu lange in seiner Offenstellung verbleibt, schlägt die Erfindung außerdem vor, dass das Steuermodul mit dem zweiten Absperrorgan derart verbunden ist, dass das zweite Absperrorgan kurzzeitig nach einem Temperaturabfall in seine geschlossene Stellung zurückgestellt wird. Hierzu kann das Steuermodul einen Timer vorsehen.

Besonders vorteilhaft lässt sich das erfindungsgemäße Wamsystem bei einem Rasenmäher mit wenigstens einer über einen Hubzylinder zwischen einer Arbeitsstellung und einer ausgehobenen Stellung verstellbaren Mäheinheit einsetzen. Bei einem Ausfahren des Hubzylinders wird in der Regel eine größere Flüssigkeitsmenge benötigt, die bei einem Einfahren des oder der Hubzylinder wieder in den Behältern aufgenommen werden soll. Um dies in einfacher Weise zu ermöglichen, sieht die Erfindung schließlich vor, dass eine Steuereinheit zum Beaufschlagen des Hubzylinders mit dem Steuermodul derart verbunden ist, dass bei einem Einfahren der Kolbenstange das vierte Absperrorgan in seine offene Stellung verstellt wird.

Letztlich ist noch vorgesehen, dass die Peilkammer in ihrem unteren Bereich mit einem Füllstandsanzeiger versehen ist, der mit dem Steuermodul derart verbunden ist, dass beim Absinken des Flüssigkeitsstandes auf den Füllstandsanzeiger die Signaleinrichtung anspricht, wobei der Inhalt der Peilkammer derart bemessen ist, dass bei einem Ausfahren der Kolbenstange eines oder aller Hubzylinder der Flüssigkeitsstand in der Peilkammer oberhalb der Lage des Füllstandsanzeigers verbleibt. Auf diese Weise wiederum wird ein Falschalarm vermieden.

In der Zeichnung ist ein nachfolgend näher erläutertes Ausführungsbeispiel der Erfindung dargestellt. Es zeigt:

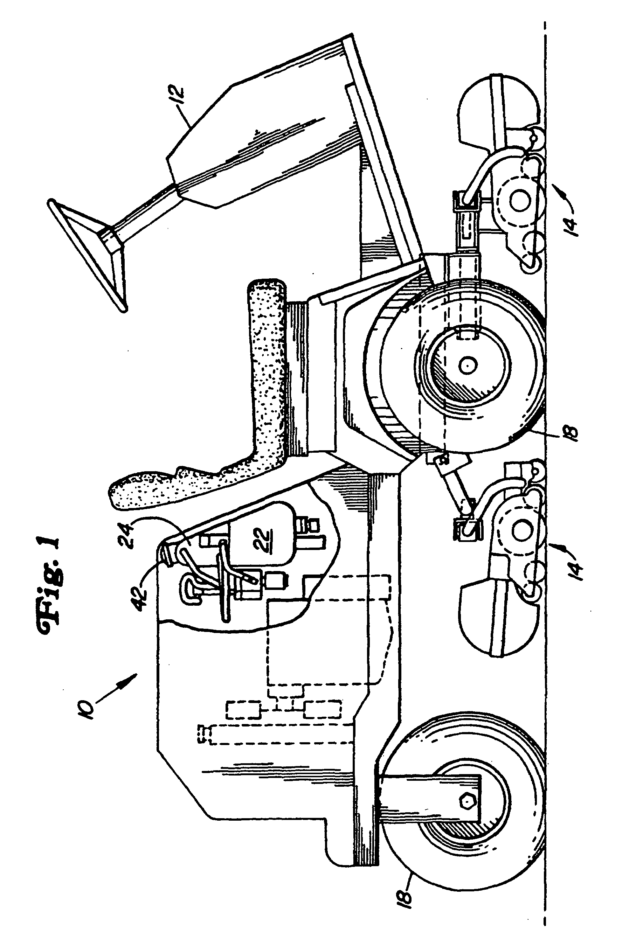

- Fig. 1: einen Sitzrasenmäher in Seitenansicht,

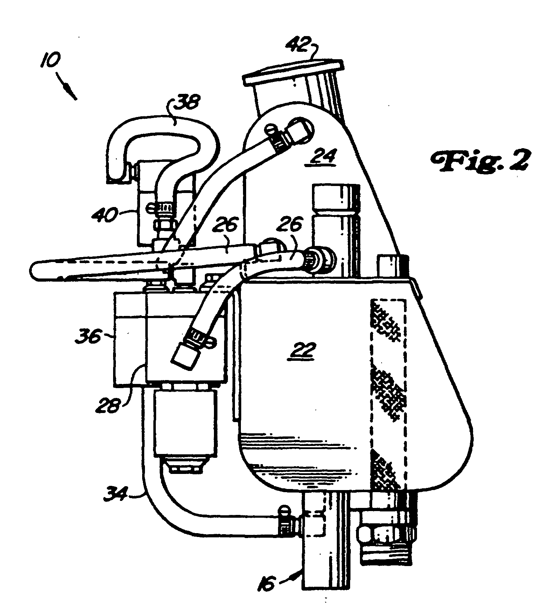

- Fig. 2: ein Flüssigkeitsleckwarnsystem in Seitenansicht,

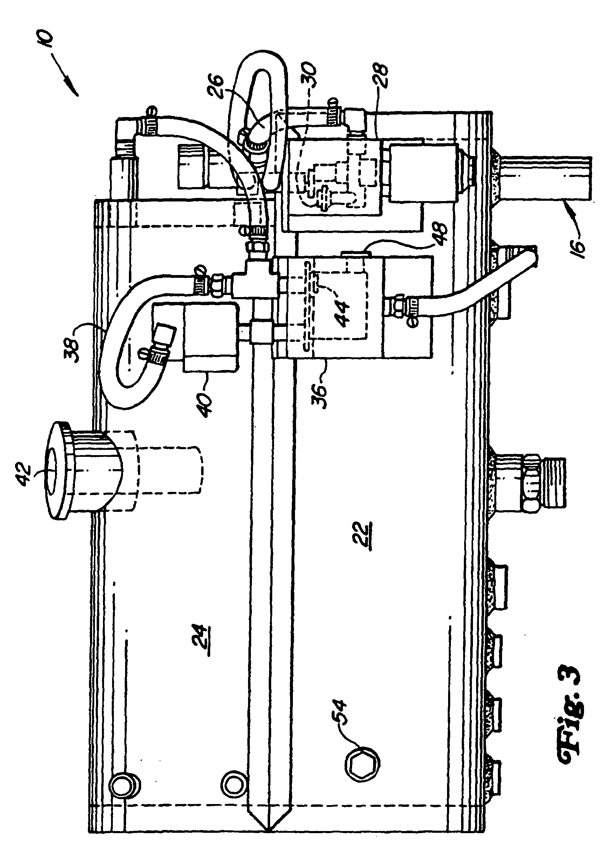

- Fig. 3: das Flüssigkeitsleckwarnsystem nach Fig. 2 in einer Ansicht von rückwärts,
- Fig. 4: das Warnsystem nach Fig. 2 und 3 in schematischer Darstellung und nicht gestartetem Fahrzeug,
- Fig. 5: das Warnsystem nach Fig. 2 und 3 in schematischer Darstellung und gestartetem Fahrzeug,
- Fig. 6: das Warnsystem nach den Fig. 2 und 3 in schematischer Darstellung, wobei Kolbenstangen in ihre Hubzylinder zum Absenken der Mäheinheiten in ihre Arbeitsstellung eingefahren werden und
- Fig. 7: einen elektrischen Schaltkreis für das Flüssigkeitsleckwarnsystem.

In der Zeichnung ist ein bevorzugtes Ausführungsbeispiel für ein Flüssigkeitswarnsystem bzw. für einen Leckdetektor 10 nach der Erfindung dargestellt. Er ist für ein Fahrzeug 12 bestimmt, an das mehrere Mäheinheiten 14 in Spindelform angeschlossen sind. Derartige Mäher werden bevorzugt zum Schneiden der Greens oder der Spielflächen auf Golfplätzen eingesetzt. Der Leckdetektor 10 steht mit dem Hydrauliksystem 16 des Fahrzeugs in Wirkverbindung, wobei das Hydrauliksystem des Fahrzeugs 12 zum Antrieb seiner Antriebsräder 18, der Messer der Mäheinheiten 14 und zum Beaufschlagen der Hydraulikzylinder 20 dient, über die die Mäheinheiten zwischen ausgehobenen Transportstellungen und abgesenkten Arbeitsstellungen verstellbar sind.

Zu dem Leckdetektor 10 gehört der Haupttank 22 oder Sammelbehälter des Hydrauliksystems 16 des Fahrzeugs 12. Oberhalb des Haupttanks 22 ist ein Ausgleichsbehälter oder Expansionstank 24 vorgesehen, der bei ansteigenden Temperaturen aus dem Haupttank expandierende hydraulische Flüssigkeit aufnimmt. Hierzu ist zwischen dem Haupttank 22 und dem Expansionstank 24 eine erste Hydraulikleitung 26 geschaltet, über die die Flüssigkeit bei thermischen Expansionen ausweichen kann, wie nachfolgend noch näher erläutert wird. In der ersten Hydraulikleitung 26 ist ein Ventil 28 für Rückflüssigkeit, das in den Ansprüchen als zweites Absperrorgan bezeichnet ist, vorgesehen. Das Ventil 28 wird über einen Solenoid gesteuert und ist zwischen zwei Stellungen verstellbar, und zwar einer den Flüssigkeitsdurchfluss gestattenden offenen und einer den Flüssigkeitsdurchfluss sperrenden geschlossenen Stellung. In der offenen Stellung kann die hydraulische Flüssigkeit ungehindert durch das Ventil 28 zwischen dem Expansionstank 24 und dem Haupttank 22 fließen. In der geschlossenen Stellung kann keine Flüssigkeit aus dem Expansionstank 24 in den Haupttank 22 fließen.

Die erste Hydraulikleitung 26 ist ferner noch mit einer das Ventil 28 überbrückenden Bypassleitung 32 versehen, in der ein in den Ansprüchen als erstes Absperrorgan bezeichnetes Sperrventil 30 in Form eines Rückschlagventils vorgesehen ist. Das Sperrventil 30 erlaubt eine Flüssigkeitsverbindung zwischen dem Haupttank 22 und dem Expansionstank 24 bei expandierender Flüssigkeit, wenn die Temperatur ansteigt.

Eine zweite Hydraulikleitung 34 verbindet die Bodenseite des Haupttanks 22 mit der Bodenseite einer Peilkammer 36, und eine dritte Leitung 38 erstreckt sich zwischen der Oberseite der Peilkammer 36 und einem oberen Teil des Expansionstanks 24. Ein über eine Solenoid steuerbares und in den Ansprüchen als viertes Absperrorgan bezeichnetes Entlüftungsventil 40 ist in der dritten Leitung 38 vorgesehen und zwischen einer offenen und einer geschlossenen Stellung verstellbar. In seiner offenen Stellung kann Luft aus der Peilkammer 36 in den oberen Bereich des Expansionstanks 24 gelangen, wo sie in die Atmosphäre durch eine Entlüftungsklappe 42, die auf der Oberseite des Expansionstanks vorgesehen ist, austreten kann. In seiner geschlossenen Stellung verhindert das Entlüftungsventil 40 eine Luftströmung zwischen der Peilkammer 36 und dem Expansionstank 24. In der dritten Leitung 38 ist noch ein weiteres Sperrventil 44 in Form eines Rückschlagventils, das in den Ansprüchen als drittes Absperrorgan bezeichnet ist, vorgesehen, das derart angeordnet ist, dass Luft mit Atmosphärendruck aus dem Expansionstank 24 in die Peilkammer 36 strömen kann, um dort den Raum zu füllen, der durch aus der Peilkammer abströmende Hydraulikflüssigkeit frei geworden ist. Dies wird nachfolgend noch näher erläutert.

Bei dem bevorzugten Ausführungsbeispiel ist noch eine Warn- und Signaleinrichtung mit 46 bezeichnet. Diese signalisiert einer Bedienungsperson, dass der Füllstand in der Peilkammer 36 unter einen vorgegebenen Wert oder überhaupt abgefallen ist, was auf Leckölverluste hinweisen könnte. Ein optischer Füllstandsanzeiger 48 ist an die Peilkammer 36 angeschlossen, um den Füllstand in der Peilkammer 36 optisch zu erfassen. Fällt der Flüssigkeitsstand unter den Füllstandsanzeiger 48, dann wird von einem Steuermodul 50 aus ein Signal an eine Warnvorrichtung 52 gesendet, die ein akustisches Warnzeichen auslöst und/oder eine Warnleuchte einschaltet. Hierdurch wird der Bedienungsperson angezeigt, dass in dem Hydrauliksystem 16 ein Leck sein könnte. Wenn nämlich in dem Hydrauliksystem ein Leck vorhanden ist, dann tritt Hydraulikflüssigkeit durch das Leck aus, und Hydraulikflüssigkeit aus dem Haupttank 22 muß in das Hydrauliksystem nachfließen, um die ausgetretene Hydraulikflüssigkeit zu ersetzen. Als Folge wird aus der Peilkammer Flüssigkeit über die zweite Hydraulikleitung 34 in den Haupttank 22 eintreten, um die aus dem Haupttank ausgetretene Flüssigkeit zu ersetzen. Wenn aber auf diese Weise aus der Peilkammer 36 Flüssigkeit austritt, dann wird der Flüssigkeitspegel in der Peilkammer unter den Füllstandsanzeiger fallen. Der Alarm wird dann ausgelöst und die Bedienungsperson kann den Mähvorgang sofort abbrechen, um größere Bodenverunreinigungen zu verhindern.

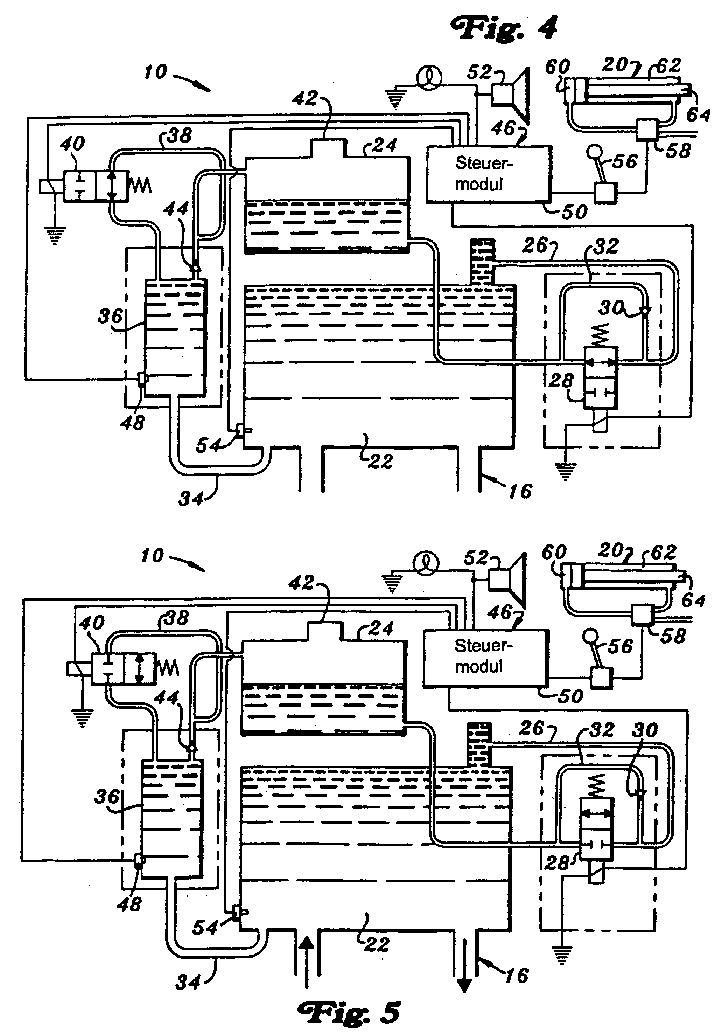

Ein Temperaturfühler 54 ist ebenfalls an dem Haupttank 22 zum Erfassen der Temperatur der in dem Haupttank vorhandenen Hydraulikflüssigkeit angeschlossen. Der Temperaturfühler 54 wiederum ist an dem Steuermodul 50 angeschlossen bzw. mit diesem verdrahtet, mit dem auch die Spule des Entlüftungsventils 40 und die Spule des Ventils 28 verdrahtet sind. Wenn nun die Flüssigkeitstemperatur im Haupttank 22 um einen vorherbestimmten Wert, wie beispielsweise um etwa 1°C fällt, dann öffnet das Steuermodul 50 die Solenoidventile 28 und 40 temporär, beispielsweise für 20 s, damit Hydraulikflüssigkeit und Luft hindurchfließen können. Ein solcher Zustand ist in Fig. 4 dargestellt. Dieser Zustand erlaubt, dass sich die Flüssigkeitshöhen auf neue von der neuen Temperatur abhängige Höhen einstellen.

Bekanntlich sinkt der Flüssigkeitsstand bei sinkenden Temperaturen, und normalerweise würde dann auch der Flüssigkeitsstand in der Peilkammer 36 absinken, und zwar bis unter den bzw. bis zum Füllstandsanzeiger 48. Der Füllstandsanzeiger würde den Flüssigkeitsabfall feststellen, und als Folge würde ein falscher Alarm, der auf ein Leck im Hydrauliksystem schließen ließe, ausgelöst. Dies wird aber nach der Erfindung dadurch verhindert oder zumindest weitgehend ausgeschlossen, da sich die Flüssigkeitsstände in den verschiedenen Tanks 22, 24 und 36 bei einem kurzzeitigen Öffnen der Ventile 28 und 40 durch das Steuermodul 50 selbsttätig auf neue Höhen einstellen, wenn ein Temperaturabfall festgestellt wurde.

Nachfolgend wird die Wirkungsweise des Leckdetektors anhand der Darstellungen in den Fig. 4 bis 6 näher erläutert. Fig. 4 zeigt das System bei noch nicht angelassenem Motor bzw. Fahrzeug 12. Man erkennt, dass sowohl das Entlüftungsventil 40 als auch das Ventil 28 ihre offenen Stellungen einnehmen. Damit kann hydraulische Flüssigkeit durch die erste und die zweite Leitung 26 und 34 zwischen dem Haupttank 22, dem Ausgleichsbehälter 24 und der Peilkammer 36 ungehindert fließen und sich selbsttätig auf entsprechende Höhen einstellen. Normalerweise sind in diesem Zustand der Haupttank 22 und die Peilkammer 36 vollständig gefüllt. Wird nun der Motor des Fahrzeugs 12 angelassen, dann verstellt das Steuermodul 50 das Entlüftungsventil 40 und das Ölrücklaufventil 28 in ihre geschlossenen Stellungen, wie es in Fig. 5 dargestellt ist. Der Haupttank 22 und die Peilkammer 36 sind immer noch vollständig gefüllt. Tritt nun im hydraulischen System aus irgendeinem Grund ein Leck auf, so tritt durch das Leck Flüssigkeit nach außen und Flüssigkeit aus dem Haupttank 22 fließt in das Hydrauliksystem 16 nach, um die Leckflüssigkeit zu ersetzen. Dies ist möglich, weil aus der über das Sperrventil 44 mit der Atmosphäre verbundenen Peilkammer 36 Flüssigkeit in den Haupttank 22 gesaugt wird. Gleichzeitig wird in die Peilkammer 36 Luft durch das Sperrventil 44 gesaugt, um den in der Peilkammer freiwerdenden Raum auszufüllen. Sobald der Flüssigkeitsstand in der Peilkammer 36 bis zum Füllstandsanzeiger 48 abgesunken ist, wird das Steuermodul 50, mit dem der Füllstandsanzeiger verbunden ist, die Warnvorrichtung 52 aktivieren. Ein entsprechender Alarm wird ausgelöst, der die Bedienungsperson auf ein Leck hinweist. Die Bedienungsperson sollte dann sofort den Mähvorgang beenden und mit dem Fahrzeug den Rasen auf dem kürzesten Weg verlassen, damit nicht zuviel Öl in den Boden gelangt. Ist dies nicht möglich, so ist das Fahrzeug sofort abzustellen, damit der durch die auslaufende Flüssigkeit entstehende Schaden in Grenzen gehalten wird.

Der Leckdetektor 10 reagiert auch auf ansteigende Flüssigkeitstemperaturen bzw. auf expandierende Hydraulikflüssigkeit. In einem solchen Fall kann die sich ausdehnende Flüssigkeit bei einer Stellung der Ventile 28 und 40, wie sie aus Fig. 5 hervorgeht, aus dem Haupttank 22 in den Ausgleichsbehälter 24 über die erste Leitung 26 und das Sperrventil 30 strömen bzw. austreten. Der Flüssigkeitsstand in der Peilkammer 36 ändert sich in diesen Fällen nicht oder höchstens nur unwesentlich, da über das Entlüftungsventil 40 und das Sperrventil 44 ein Austreten von Flüssigkeit oder Luft in den Ausgleichsbehälter 24 nicht möglich ist. Bei Erwärmung wird die sich ausdehnende Flüssigkeit vielmehr in den Haupttank 22 gedrückt. Würde die Flüssigkeit in der Peilkammer sich in der Peilkammer ausdehnen können, bestünde die Gefahr, dass ein Leck unentdeckt bliebe.

Es wurde bereits kurz darauf hingewiesen, wie das System reagiert, wenn die Flüssigkeitstemperatur fällt. In einem solchen Fall verringert sich das Flüssigkeitsvolumen. Wäre die Verstellung der Ventile 28 und 40 bei abfallender Temperatur nicht möglich, so würde bei sich verkleinerndem Flüssigkeitsvolumen im Haupttank 22 aus der Peilkammer 36 Flüssigkeit nachgesaugt, was möglich ist, da die Peilkammer bei einer Ventilstellung nach Fig. 5 mit der Atmosphäre verbunden ist. Dies hätte aber zur Folge, dass der Flüssigkeitsstand in der Peilkammer bis zum Füllstandsanzeiger abfallen kann, wodurch dann wiederum ein Falschalarm ausgelöst würde. Dies wird nach der Erfindung verhindert oder zumindest weitgehend vermieden. Wird nämlich bei dem bevorzugten Ausführungsbeispiel der Temperaturfühler 54 einen Temperaturabfall der hydraulischen Flüssigkeit ermitteln, dann wird das Steuermodul 50 das Entlüftungsventil 40 und das Ölrücklaufventil 28 in die offenen Stellungen verstellen, da deren Magnetspulen entsprechend aktiviert werden. Bei sich in seiner Offenstellung befindlichem Ventil 28 wird bei sich im Haupttank zusammenziehender Flüssigkeit aus dem Ausgleichsbehälter 24 in den Haupttank 22 Flüssigkeit gesaugt, die den dort frei gewordenen Raum einnimmt. Wenn aber Flüssigkeit aus dem Ausgleichsbehälter 24 in den Haupttank 22 strömt, wird Flüssigkeit aus dem Haupttank in die Peilkammer 36 über die zweite Leitung 34 eintreten. Das offene Entlüftungsventil 40 erlaubt, dass Luft aus der Peilkammer 36 in den Ausgleichsbehälter 24 bei in die Peilkammer eintretender Flüssigkeit gelangt, die schließlich durch die Entlüftungsklappe 42 in die Atmosphäre eintritt. Die Ventile befinden sich allerdings nur kurzzeitig in ihren Offenstellungen, aber lange genug, damit sich der Haupttank 22 wieder vollständig füllen kann. Gleichzeitig stellt sich auch der Flüssigkeitsstand in der Peilkammer ein. Diese Vorgänge erfolgen alle automatisch.

Zu dem von dem Haupttank 22 mit Flüssigkeit beschickten Hydrauliksystem 16 gehören mehrere doppelseitig beaufschlagbare Hubzylinder 20, die durch entsprechendes Ein- und Ausfahren ihrer Kolbenstangen 64 die zugehörigen Mäheinheiten 14 anheben oder absenken. Zum Anheben der Mäheinheiten 14 betätigt die Bedienungsperson einen Hebel 56, der Hydraulikventile 58 derartig verstellt, dass Druckflüssigkeit aus dem Hydrauliksystem 16 in das zylinderseitige Ende 60 der Hubzylinder 20 strömt, wobei Flüssigkeit aus dem kolbenstangenseitigen Enden 62 austritt. Auf diese Weise werden die Kolbenstangen 64 der Hubzylinder 20 ausgefahren und die Mäheinheiten 14 angehoben. Bei dem Ausfahren der Kolbenstangen 64 muß die in das zylinderseitige Ende 60 der Hubzylinder 20 einströmende Flüssigkeit den vorher von der Kolbenstange 64 eingenommenen Raum mitausfüllen, so dass bei einem Ausfahren der Kolbenstange 64 in das zylinderseitige Ende der Hubzylinder 20 mehr Flüssigkeit einströmt als aus dem kolbenseitigen Ende 62der Hubzylinder 20 austritt. Hierdurch entsteht somit bei einem Ausfahren ein Mehrbedarf an Flüssigkeit oder eine Nettoeinströmung aus dem Hydrauliksystem 16. Dieser Mehrbedarf an Hydraulikflüssigkeit wird durch aus dem Haupttank 22 zu entnehmende Flüssigkeit gestillt. Bei diesem Vorgang befindet sich das Ventil 28 in seiner geschlossenen Stellung, so dass aus dem Ausgleichsbehälter 24 keine Flüssigkeit in den Haupttank 22 gesaugt werden kann. Vielmehr wird die dem Haupttank 22 entnommene Flüssigkeit durch Flüssigkeit aus der Peilkammer 36 ersetzt, wobei in die Peilkammer 36 durch das Sperrventil 44 Luft einströmen kann, um den durch die austretende Flüssigkeit frei werdenden Raum zu füllen. Das Entlüftungsventil 40 verbleibt in seiner geschlossenen Stellung und blockiert damit einen Durchfluss von Luft oder sogar Flüssigkeit. Damit bei diesem Vorgang der Füllstand in der Peilkammer nicht bis zum Füllstandsanzeiger 48 absinkt, ist der Rauminhalt der Peilkammer entsprechend gestaltet. Hierdurch wiederum wird ein Falschalarm vermieden oder zumindest weitgehend ausgeschaltet.

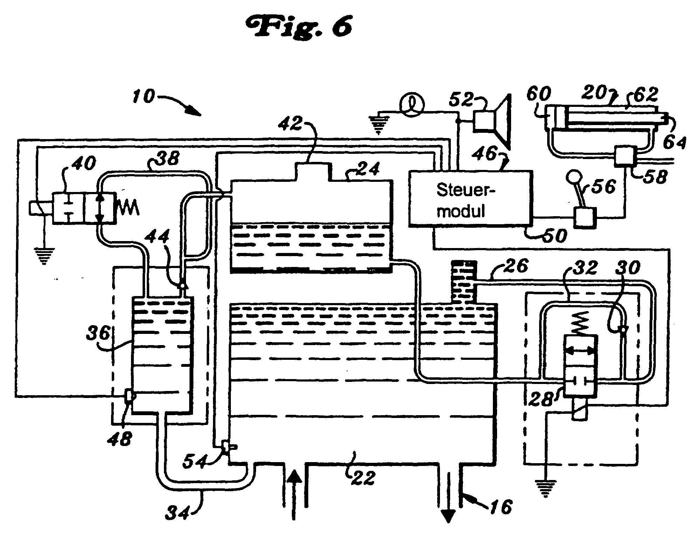

Um die Mäheinheiten nun in ihre Arbeitsstellung auf dem Rasen absenken zu können, betätigt die Bedienungsperson den Hebel 56 derart, dass die Hydraulikventile 58 eine Stellung einnehmen, in der Flüssigkeit aus den zylinderseitigen Enden 60 der Hubzylinder 20 in das Hydrauliksystem austreten und in die kolbenseitigen Enden 62 eintreten kann, wodurch die Kolbenstangen 64 in die Hubzylinder 20 eingefahren werden. Hierbei ist die in die kolbenstangenseitigen Enden einströmende Flüssigkeitsmenge geringer als die aus den zylinderseitigen Enden austretende. Es entsteht also ein größerer Nettoausfluß von Flüssigkeit bei einem Absenken der Mäheinheiten in ihre Arbeitsstellung. Dieser Mehrausfluß aus dem Hydrauliksystem wiederum gelangt in den Haupttank 22 und in die Peilkammer 36. Bei diesem Vorgang befindet sich das Ventil 28 in seiner geschlossenen Stellung, so dass keine Flüssigkeit aus dem Haupttank 22 über das Ventil 28 in den Ausgleichsbehälter 24 gelangen kann. Andererseits ist bei diesem Vorgang das Entlüftungsventil 40 offen. Dies ist möglich, da das Steuermodul 50 mit dem Hebel 56 derart verbunden ist, dass es das Einfahren der Kolbenstangen 64 in die Hubzylinder 20 feststellt und als Folge das Entlüftungsventil 40 in seine in Fig. 6 wiedergegebene Offenstellung verstellt. In der Offenstellung des Entlüftungsventils 40 kann Luft aus der Peilkammer 36 austreten, wenn in die Peilkammer zusätzliche Flüssigkeit aus dem Haupttank 22 eintritt. Die Peilkammer ist dabei volumenmäßig derart ausgebildet, dass die bei einem Absenken der Mäheinheiten 14 aus dem Haupttank 22 einströmende Flüssigkeit die Peilkammer wieder vollständig füllt, ohne jedoch in die dritte Leitung 38 oder sogar in den Ausgleichsbehälter 24 zu gelangen. Sollte dennoch einmal Flüssigkeit in die Leitung 38 beim Einfahren der Kolbenstangen einspritzen, so wird diese entweder durch das Entlüftungsventil 40 in die Peilkammer 36 zurücklaufen oder vor dem Sperrventil 44 zur Ruhe kommen und wiederum in die Peilkammer zurücklaufen, wenn das Sperrventil das nächste Mal öffnet. Die serpentinenartige Führung der dritten Leitung 38 verhindert, dass Spritzflüssigkeit in den Ausgleichsbehälter 24 oder sogar in die Atmosphäre gelangt.

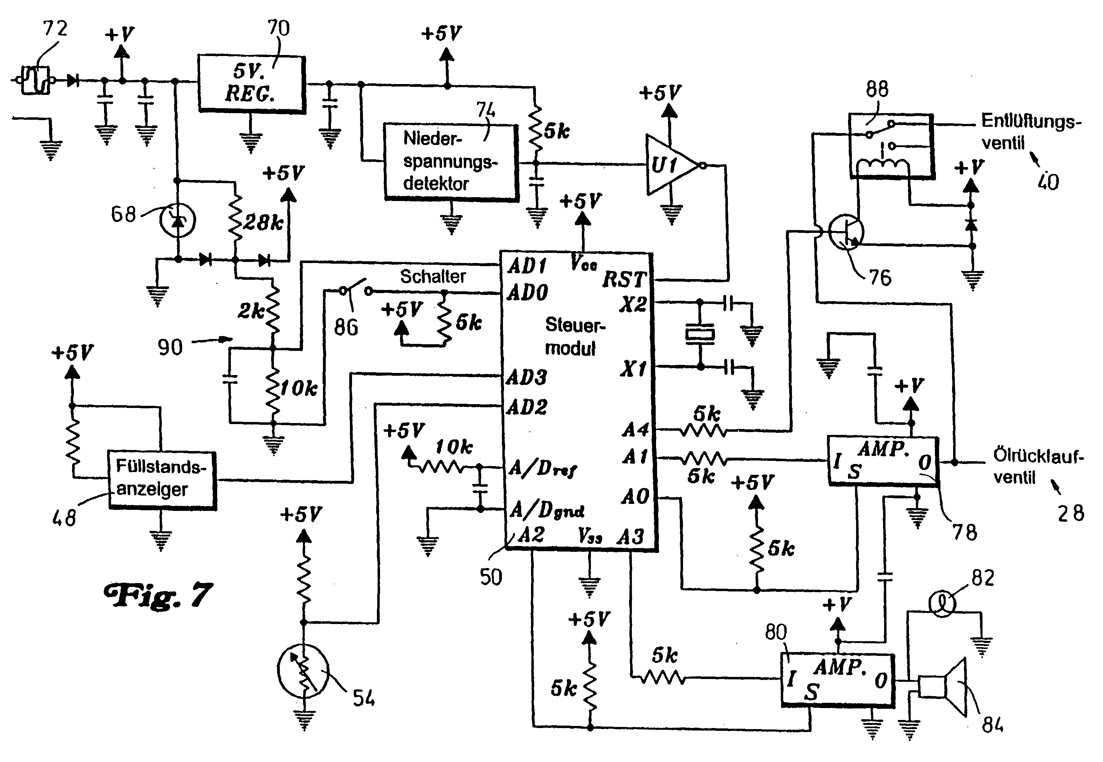

Fig. 7 zeigt den Schaltplan für die elektronische Versorgung des Leckdetektors 10. Die mit +V gekennzeichneten Stellen liegen an der 12 V-Spannungsversorgung der nicht dargestellten Batterie. Eine 5-V-Referenzspannung wird von einem 5-V-Regler 70 zur Verfügung gestellt. Falls die Eingangsspannung über 15 V ansteigt, wird die Schaltung durch eine 6A-Sicherung 72 geschützt. Ihre Aktivierung erfolgt über eine 15 V-Zener-Diode 68, die in diesem Falle durchbricht.

Zentraler Baustein ist das Steuermodul 50. Es hat einen 'reset'-Eingang RST, Eingänge AD0, AD1, AD2, AD3, A/Dref und A/Dgnd. Der Eingang A/Dref liegt über einen 10 k-Widerstand an der Referenzspannung +5V und der Eingang A/Dgnd befindet sich auf Masse. AD1 liegt über einen Spannungsteiler 90 auf einem 'high'-Pegel, AD0 liegt an einem Schalter 86 und befindet sich je nach Schalterstellung auf 'low' oder 'high', AD3 liegt am Füllstandsanzeiger 48 und AD2 liegt am Temperaturfühler 54. Ausgänge X1 und X2 des Steuermoduls 50 sind über Kondensatoren auf Masse gelegt und weitere Ausgänge A0, A1, A2, A3, A4 sind mit Verstärkern 76, 78 und 80 verbunden. Der 'reset'-Eingang RST des Steuermoduls 50 wird über einen in Kombination mit einem Niederspannungsdetektor 74 arbeitenden Inverter U1 aktiviert, wenn der Spannungspegel (bis auf eine kleine Toleranz) unter 5 V abfällt. In diesem Fall liegt der Eingang RST auf 'high' und das Steuermodul 50 wird auf fest vorgegebene Werte der an den Ausgängen des Moduls 50 anliegenden Spannungen zurückgesetzt, so dass der Betrieb des Rasenmähers unterbrochen wird, bis der Spannungsabfall behoben ist. Das Steuermodul 50 benutzt über den Eingang A/Dref die vom Spannungsregler 70 gelieferten 5 V als Referenz für die vom Füllstandsanzeiger 48 und dem Temperaturfühler 54 gelieferten Spannungswerte und für die am Eingang AD0 des Steuermoduls 50 anliegende Spannung.

Am Ausgang des Füllstandsanzeigers 48 und Eingang AD3 des Steuermoduls 50 liegt keine Spannung, wenn sich Hydraulikflüssigkeit auf dem Sensorkopf des Füllstandsanzeigers 48 befindet bzw. wenn der Flüssigkeitspegel über dem Sensorkopf liegt. Am Temperaturfühler 54 wird eine Spannung abgegriffen, die zur Temperatur proportional ist und an den Eingang AD2 des Steuermoduls 50 gelegt. Beim Schließen des Schalters 86 wird der Eingang AD0 des Steuermoduls 50 auf 'low' gebracht. Ein Relais 88 steuert das Entlüftungsventil 40 und wird durch einen Transistorverstärker 76 angetrieben. Seine Basis liegt über einen Widerstand am Ausgang A4 des Steuermoduls 50. Die Verstärker 78, 80 werden zum Schließen des Ölrücklaufventils 28 und des Entlüftungsventils 40 bzw. zur Betätigung der Alarmvorrichtung 46 eingesetzt, wenn sie entsprechende Signale vom Steuermodul 50 erhalten. Zur Alarmvorrichtung 46 gehört eine Warnleuchte 82 und ein Lautsprecher 84. Die Verstärker 78, 80 haben Eingänge 'I', an denen die Steuersignale anliegen. Über die Augänge 'S' der Verstärker werden Kontrollsignale an das Steuermodul 50 zurückgegeben.

Das Steuermodul 50 läuft mit einem Programm entsprechend der funktionellen Beschreibung des Leckdetektors: Im abgeschalteten Zustand des Fahrzeugs liegt an den Ausgängen des Steuermoduls 50 keine Spannung und das Entflüftungsventil 40 sowie das Ölrücklaufventil 28 sind geöffnet, wie es in Fig. 4 dargestellt ist. Beim Einschalten des Rasenmähers bzw. seines Motors wird eine Spannung an den Ausgang A1 des Steuermoduls 50 gelegt, die über den Verstärker 78 einen Stromfluss durch die Solenoide von Entlüftungsventil 40 und Ölrücklaufventil 28 ermöglicht, wodurch diese geschlossen werden und die in Fig. 5 gezeigte Position einnehmen. Die für den Stromfluss erforderliche Spannung wird der Batterie entnommen. Wird am Temperaturfühler 54 aufgrund einer Temperatursenkung eine kleinere Spannung abgegriffen, wird über den Ausgang A1 des Steuermoduls der Verstärker 78 gesperrt und der Stromfluss durch das Entlüftungsventil 40 und das Ölrücklaufventil 28 kurzfristig aufgrund einer Zeitschaltvorrichtung im Steuermodul 50 unterbunden, was die Ventile in ihre geöffnete Stellung bringt. Beim Einfahren der Kolbenstangen 62, was dem Steuermodul 50 durch Betätigen des mit dem Hebel 56 verbundenen elektronischen Schalters 86 angezeigt wird, liegt am Ausgang A4 des Steuermoduls 50 eine Spannung, die den Transistor 76 leitend macht und das Relais 88, das dem Entlüftungsventil vorgeschaltet ist, aktiviert. Dadurch wird der Stromfluss zum Entlüftungsventil 40 unterbrochen und dieses geöffnet, wie es in Fig. 6 dargestellt ist. Wenn der Füllstand unter die Höhe des Füllstandsanzeigers 48 absinkt, liegt am Eingang AD3 und am Ausgang A3 des Steuermoduls 50 eine Spannung. Dadurch wird ein Stromfluss durch den Verstärker 80 und den Lautsprecher 84 sowie die Warnleuchte 82 ermöglicht.

## Patentansprüche

1. Flüssigkeitsleckwarnsystem mit einem Haupttank (22), einem Ausgleichsbehälter (24), der mit dem Haupttank (22) verbunden ist, einem ersten Absperrorgan (30), das bei thermischer Expansion der hydraulischen Flüssigkeit eine Flüssigkeitsverbindung von dem Haupttank (22) in den Ausgleichsbehälter (24) gestattet, und mit einer Signaleinrichtung (52), **gekennzeichnet durch** eine mit dem Haupttank (22) verbundene Peilkammer (36), ein zweites zwischen einer geschlossenen und einer offenen Stellung verstellbaren und zwischen dem Haupttank (22) und dem Ausgleichsbehälter (24) vorgesehenes Absperrorgan (28), einen Temperaturfühler (54) für die Flüssigkeit und **durch** ein Steuermodul (50), das mit dem Temperaturfühler (54) und dem zweiten Absperrorgan (28) derart verbunden ist, dass das zweite Absperrorgan (28) bei einem Temperaturabfall aus seiner geschlossenen Stellung in seine offene Stellung verstellt wird.

2. Warnsystem nach Anspruch 1, **gekennzeichnet durch** ein drittes Absperrorgan (44), das aus seiner Schließstellung in eine Stellung verstellbar ist, in der Luft in die Peilkammer (36) einsaugbar ist.

3. Warnsystem nach Anspruch 1, **gekennzeichnet durch** ein viertes zwischen einer offenen und einer geschlossenen Stellung verstellbares Absperrorgan (40), das in seiner offenen Stellung die Peilkammer (36) mit der Atmosphäre verbindet.

4. Warnsystem nach einem oder mehreren der vorherigen Ansprüche, **dadurch gekennzeichnet, dass** das vierte Absperrorgan (40) mit dem Steuermodul (50) derart verbunden ist, dass es bei Temperaturabfall der Flüssigkeit in seine offene Stellung verstellt wird.

5. Warnsystem nach einem oder mehreren der vorherigen Ansprüche, **dadurch gekennzeichnet, dass** die Oberseite der Peilkammer (36) mit einem oberen Bereich des Ausgleichsbehälters (24) über eine Leitung (38) verbunden ist, wobei das dritte und vierte Absperrorgan (44,40) in dieser Leitung vorgesehen sind.

6. Warnsystem nach Anspruch 5, **dadurch gekennzeichnet, dass** die Leitung (38) serpentinenartig geführt ist.

7. Warnvorrichtung nach Anspruch 1, **dadurch gekennzeichnet, dass** das Steuermodul (50) mit dem zweiten Absperrorgan (28) derart verbunden ist, dass das zweite Absperrorgan kurzzeitig nach einem Temperaturabfall in seine geschlossene Stellung zurückgestellt wird.

8. Warnsystem nach einem oder mehreren der vorherigen Ansprüche für einen Rasenmäher mit wenigstens einer über einen Hubzylinder (20) zwischen einer Arbeitsstellung und einer ausgehobenen Stellung verstellbaren Mäheinheit (14), **dadurch gekennzeichnet, dass** eine Steuereinheit zum Beaufschlagen des Hubzylinders (20) mit dem Steuermodul (50) derart verbunden ist, dass bei einem Einfahren der Kolbenstange (64) das vierte Absperrorgan (40) in seine offene Stellung verstellt wird.

9. Warnsystem nach einem oder mehreren der vorherigen Ansprüche, **dadurch gekennzeichnet, dass** die Peilkammer (36) in ihrem unteren Bereich mit einem Füllstandsanzeiger (48) versehen ist, der mit dem Steuermodul (50) derart verbunden ist, dass beim Absinken des Flüssigkeitsstands auf den Füllstandsanzeiger die Signaleinrichtung (52) anspricht.

10. Warnsystem nach einem oder mehreren der Ansprüche 8 und 9, **dadurch gekennzeichnet, dass** der Inhalt der Peilkammer (36) derart bemessen ist, dass bei einem Ausfahren der Kolbenstange (64) eines oder aller Hubzylinder (20) der Flüssigkeitsstand in der Peilkammer (36) oberhalb der Lage des Füllstandsanzeigers (48) verbleibt.

## Claims

1. A fluid leak warning system, with a main tank (22), an equalising container (24) which is connected to the main tank (22), a first shut-off element (30) which allows a fluid connection from the main tank (22) into the equalising container (24) on thermal expansion of the hydraulic fluid, and with a signalling device (52), **characterized by** a gauge chamber (36) connected to the main tank (22), a second shut-off element (28) which can shift between a closed position and an open position and is provided between the main tank (22) and the equalising container (24), a temperature sensor (54) for the fluid and by a control module (50) which is so connected to the temperature sensor (54) and the second shut-off element (28) that the second shut-off element (28) is shifted from its closed position into its open position on a drop in temperature.

2. A warning system according to claim 1, **characterized by** a third shut-off element (44) which can shift out of its closed position into a position in which the air can be sucked into the gauge chamber (36).

3. A warning system according to claim 1, **characterized by** a fourth shut-off element (40) which can shift between an open and a closed position and which connects the gauge chamber (36) to the atmosphere in the open position.

4. A warning system according to one or more of the preceding claims, **characterized in that** the fourth shut-off element (40) is so connected to the control module (50) that it is shifted into its open position on a drop in temperature.

5. A warning system according to one or more of the preceding claims, **characterized in that** the upper side of the gauge chamber (36) is connected to an upper region of the equalising container (24) through a line (38), wherein the third and fourth shut-off elements (44, 40) are provided in this line.

6. A warning system according to claim 5, **characterized in that** the line (38) runs in serpentine form.

7. A warning system according to claim 1, **characterized in that** the control module (50) is so connected to the second shut-off element (28) that the second shut-off element is reset to its closed position shortly after a drop in temperature.

8. A warning system according to one or more of the preceding claims for a lawnmower with at least one mower unit (14) adjustable between a working position and a raised position by a lift cylinder (20), **characterized in that** a control unit for applying pressure to the lift cylinder (20) is so connected to the control module (50) that the fourth shut-off element (40) is shifted into its open position on retraction of the piston rod (64)..

9. A warning system according to one or more of the preceding claims, **characterized in that** the gauge chamber (36) is provided with a state of fill indicator (48) in its lower region, which is so connected to the control module (50) that the signalling device (52) responds when the fluid level falls to the state of fill indicator.

10. A warning system according to one or more of claims 8 and 9, **characterized in that** the content of the gauge chamber (50) is so dimensioned that the fluid level in the gauge chamber (36) remains above the position of the state of fill indicator (48) on extension of the piston rod of one or all lift cylinders (20).

## Revendications

1. Système d'avertissement d'une fuite de liquide comprenant un réservoir principal (22), un réservoir de compensation (24), qui est relié au réservoir principal (22), un premier organe d'obturation (30), qui, en cas d'expansion thermique du fluide hydraulique, permet d'acheminer le liquide du réservoir principal (22) vers le réservoir de compensation (24), et comprenant un dispositif de signalisation (52), **caractérisé par** une chambre de jaugeage (36) reliée au réservoir principal (22), un deuxième organe d'obturation (28) destiné à être réglé entre une position fermée et une position ouverte et prévu entre le réservoir principal (22) et le réservoir de compensation (24), un capteur de température (54) pour le liquide et un module de commande (50), qui est relié au capteur de température (54) et au deuxième organe d'obturation (28) de telle sorte que le deuxième organe d'obturation (28) passe de sa position fermée vers sa position ouverte en cas de chute de température.

2. Système d'avertissement selon la revendication 1, **caractérisé par** un troisième organe d'obturation (44), apte à être réglé à partir de sa position fermée vers une position, dans laquelle l'air peut être aspiré dans la chambre de jaugeage (36).

3. Système d'avertissement selon la revendication 1, **caractérisé par** un quatrième organe d'obturation (40) destiné à être réglé entre une position ouverte et une position fermée, lequel, dans sa position ouverte, fait communiquer la chambre de jaugeage (36) avec l'atmosphère.

4. Système d'avertissement selon une ou plusieurs des revendications précédentes, **caractérisé en ce que** le quatrième organe d'obturation (40) est relié au module de commande (50), de telle sorte que, en cas de chute de la température du liquide, ledit organe d'arrêt est amené dans sa position ouverte.

5. Système d'avertissement selon une ou plusieurs des revendications précédentes, **caractérisé en ce que** le côté supérieur de la chambre de jaugeage (36) est relié à une zone supérieure du réservoir de compensation (24) par l'intermédiaire d'une conduite (38), le troisième et le quatrième organe d'obturation (44, 40) étant prévus dans ladite conduite.

6. Système d'avertissement selon la revendication 5, **caractérisé en ce que** la conduite (38) est guidée en forme de serpentin.

7. Système d'avertissement selon la revendication 1, **caractérisé en ce que** le module de commande (50) est relié au deuxième organe d'obturation (28) de telle sorte que le deuxième organe d'obturation (28) est ramené dans sa position fermée un court laps de temps après une chute de température.

8. Système d'avertissement selon une ou plusieurs des revendications précédentes destiné à une tondeuse à gazon comprenant au moins une unité de coupe (14) qui peut être réglée au moyen d'un vérin de levage (20) entre une position de travail et une position relevée, **caractérisé en ce qu'**une unité de commande destinée à solliciter le vérin de levage (20) est reliée au module de commande (50), de telle sorte que le quatrième organe d'obturation (40) est amené dans sa position ouverte lorsque la tige de piston (64) se déplace en position rentrée.

9. Système d'avertissement selon une ou plusieurs des revendications précédentes, **caractérisé en ce que** la chambre de jaugeage (36), dans sa partie inférieure, est munie d'un indicateur de niveau (48) qui est relié au module de commande (50) de telle sorte que le dispositif de signalisation (52) réagit à l'indicateur de niveau (48) en cas d'abaissement du niveau de liquide.

10. Système d'avertissement selon une ou plusieurs des revendications 8 et 9, **caractérisé en ce que** le contenu de la chambre de jaugeage (36) est dimensionné de telle sorte que, en cas d'extraction de la tige de piston (64) de l'un ou de tous les vérins de levage (20), le niveau du liquide dans la chambre de jaugeage (36) reste au-dessus de la position de l'indicateur de niveau (48).
